Europäisches Patentamt

European Patent Office

Office européen des brevets

(11) Numéro de publication: **0 135 488**
**A2**

(12) **DEMANDE DE BREVET EUROPEEN**

(21) Numéro de dépôt: **84870096.9**

(51) Int. Cl.⁴: **B 01 D 45/06**

(22) Date de dépôt: **06.07.84**

(30) Priorité: **22.07.83 LU 84927**

(43) Date de publication de la demande:
**27.03.85 Bulletin 85/13**

(84) Etats contractants désignés:
**DE FR NL SE**

(71) Demandeur: **COCKERILL MECHANICAL INDUSTRIES**
**1, quai Greiner**
**B-4100 Seraing(BE)**

(72) Inventeur: **Allard, Georges Alfred**
**Rue de la Dime, 10**
**B-4920 Embourg Chaudfontaine(BE)**

(72) Inventeur: **Salkin, Robert Vital**
**Avenue des Camélias, 78**
**B-1150 Bruxelles(BE)**

(74) Mandataire: **De Brabanter, Maurice et al,**
**Bureau VANDER HAEGHEN 63 Avenue de la Toison d'Or**
**B-1060 Bruxelles(BE)**

(54) **Dispositif de filtration de fluides gazeux à haute température.**

(57) Dispositif de filtration de fluides gazeux à haute température, présentant, le long d'un trajet parcouru par le fluide gazeux à filtrer, au moins un passage à chicanes comportant des espaces de retenue constituant des chambers collectrices de poussières, les dimensions des parties étant calculées en fonction des caractéristiques du fluide à filtrer pour que l'écoulement de celui-ci le long du dispositif reste sensiblement de caractère laminaire.

FIG. 2

## Dispositif de filtration de fluides gazeux à haute température

L'invention concerne un dispositif de filtration de fluides gazeux à haute température.

Dans de nombreux processus industriels tels que la combustion, la gazéification des matières solides, les échanges thermiques ou les réactions chimiques mettant en oeuvre des gaz et des matières solides pulvérulentes, il y a avantage à disposer de systèmes de filtration permettant d'éliminer tout ou partie des particules entraînées par les gaz en direction de la cheminée ou des conduits de rejet.

Les particules arrêtées sont généralement accumulées sur le filtre ou dans une trémie qui y est jointe, et sont ensuite dirigées vers le rebut ou vers une utilisation éventuelle. Le rendement de filtration est mesuré par le rapport de la masse des particules recueillie à celle des particules entrant dans le filtre. Les qualités des filtres s'apprécient d'après la perte de charge qui s'établit entre leur entrée et leur sortie, d'après le niveau de température jusqu'auquel ils peuvent travailler, d'après le degré de finesse des poussières qu'ils sont capables de capter et d'après leur résistance mécanique en service.

La plupart des filtres qui ont été développés jusqu'à présent et qui sont utilisés en service industriel ne peuvent offrir simultanément les performances optimales. Les filtres à manches requièrent l'utilisation de matériaux spéciaux très coûteux. Les filtres électrostatiques ont des limites de température supérieures à ne pas dépasser. Les filtres à lit fluidisé occasionnent des pertes de charge importantes. Les filtres à jalousies habituels sont le siège de turbulences préjudiciables et à leur rendement et à leur résistance mécanique. Le dispositif de filtration, suivant l'invention, de fluides gazeux à haute température est caractérisé en ce qu'il présente, le long d'un trajet parcouru par le fluide gazeux à filtrer, au moins un passage à chicanes comportant des espaces de retenue constituant des chambres collectrices de poussières, les dimensions des parties étant calculées en fonction des caractéristiques du fluide à filtrer, pour que l'écoulement de celui-ci tout le long du dispositif reste sensiblement de caractère laminaire.

Le dispositif comporte avantageusement des espaces de retenue limités d'un côté par une surface d'un élément à chicanes, et du côté opposé, par une plaque secondaire, de préférence sensiblement parallèle à la surface de l'élément à chicanes.

Suivant une autre disposition avantageuse, le dispositif comporte au moins un espace de retenue limité à son extrémité aval par une paroi de fond éventuellement perméable au fluide gazeux et reliant la plaque secondaire à l'élément à chicanes auquel elle est sensiblement parallèle.

Suivant une autre forme de réalisation de l'invention, le dispositif suivant l'invention comporte des moyens permettant d'évacuer, autrement que par gravité, les matières retenues et accumulées dans le dispositif. Ces moyens peuvent être, par exemple, des moyens mécaniques, tels que des moyens d'application de chocs ou de vibrations ou des moyens pneumatiques.

Suivant une disposition préférée, le dispositif comprend plusieurs parois à chicanes juxtaposées, laissant entre elles des passages pour l'écoulement du fluide gazeux à filtrer, le dispositif étant limité à ses deux extrémités par des plans matériels et comportant des moyens auxiliaires pour approcher et éloigner ces plans l'un de l'autre, en sorte de déformer le système des parois à la façon d'un accordéon, déformation au cours de laquelle les parois sensiblement parallèles des chambres tendent à s'écarter l'une de l'autre et/ou à s'incliner l'une par rapport à l'autre, ce qui favorise l'évacuation des matières retenues.

Le filtre faisant l'objet de l'invention présente de multiples avantages. Sa conception en jalousies dûment dimensionnées, munies de logettes ou chambres où sont recueillies les poussières, son fonctionnement en régime laminaire, son faible coût de fabrication, son pouvoir élevé de récupération des poussières et la disposition avantageuse des pièces qui le constituent, en font un produit dont le rendement de filtration est très élevé pour une large gamme de dimensions de particules, et dont les températures d'utilisation sont considérablement plus hautes que celles des filtres habituels, ce qui permet de le disposer en un endroit des canalisations d'évacuation des gaz où les températures sont élevées, avec pour conséquences de pouvoir soulager la sollicitation à l'érosion des équipements mécaniques de récupération des calories ou des pressions dissipées, équipements qui peuvent être disposés en aval du filtre, - et de pouvoir récupérer des poussières très chaudes dont la chaleur sensible est également réalisable par ailleurs.

L'invention sera décrite à présent sur deux formes de réalisation représentées schématiquement aux dessins sur lesquels :

- la figure 1 est une coupe longitudinale d'un dispositif suivant l'invention, limité dans ce cas à une paroi à chicanes installée dans un carneau ;

- la figure 2 est une coupe longitudinale d'un dispositif suivant l'invention, comportant plusieurs passages pour un gaz à dépoussiérer, disposés par exemple en direction générale verticale.

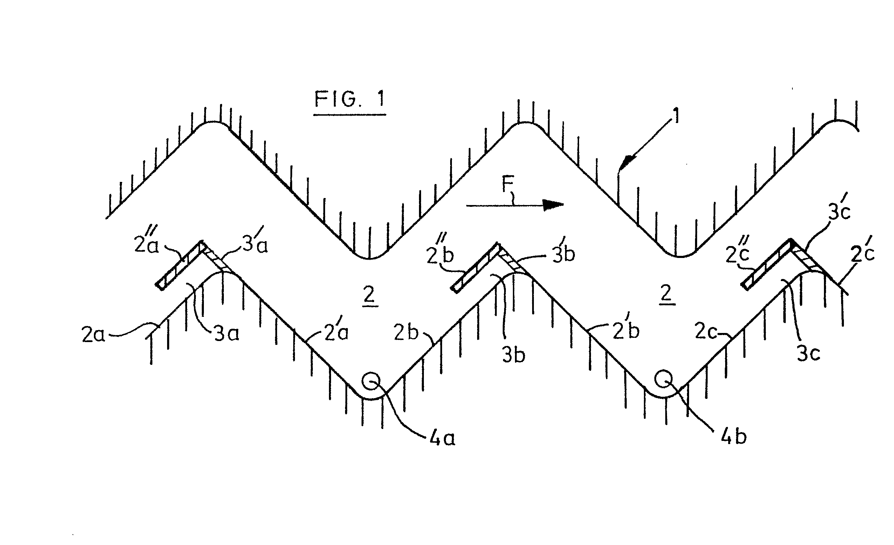

On voit sur la figure 1 les éléments essentiels d'un dispositif suivant l'invention. Dans un carneau 1 parcouru dans la direction de la flèche F par un gaz chaud à dépoussiérer, se trouve un passage à chicanes 2, c'est-à-dire un passage délimité par des parties successives $2_a$, $2'_a$, $2_b$, $2'_b$, $2_c$ ... orientées tantôt dans une direction, tantôt dans une direction sensiblement perpendiculaire (il peut en être autrement) à celle-ci. Le passage à chicanes 2 est complété, sur certaines parties de sa longueur, correspondant aux différentes chicanes, par des plaques secondaires $2''_a$, $2''_b$, $2''_c$ formant avec la surface des parties $2_a$, $2_b$, $2_c$ des chambres $3_a$, $3_b$, $3_c$ où pourront s'accumuler les poussières déchargées par le fluide chaud qui parcourt le carneau dans la direction F. Les chambres $3_a$, $3_b$, $3_c$, etc... sont fermées chaque fois à leur extrémité aval par des parois $3'_a$, $3'_b$, $3'_c$ éventuellement perméables au fluide gazeux, qui font en principe partie des éléments de chicanes $2'_a$, $2'_b$, $2'_c$.

Les éléments constituant le carneau et les plaques secondaires $2''_a$, $2''_b$, $2''_c$ sont formés d'un matériau résistant aux contraintes mécaniques et physiques à haute température.

Chaque chambre présente une ouverture d'entrée au fluide gazeux chargé des poussières et celles-ci se déposent dans les chambres ainsi que sur les éléments inclinés qui les limitent.

Il est essentiel, suivant l'invention, que les dimensions de tous les éléments du dispositif soient calculées en sorte que le régime d'écoulement du fluide à dépoussiérer soit sensiblement laminaire puisque toute turbulence altérerait le rendement général du dispositif.

Les poussières qui s'accumulent petit à petit dans les chambres et sur les éléments s'écoulent par gravité dans les canaux formés entre les éléments successifs $2'_a$, $2_b$ ; $2'_b$, $2_c$, etc... et/ou elles peuvent être chassées latéralement par des conduits d'évacuation dont on voit les embouchures en $4_a$, $4_b$ ... sous l'action de courants de gaz sous pression pénétrant dans lesdits canaux par des conduits (non montrés) débouchant en face des conduits d'évacuation. L'évacuation des poussières déposées peut également s'effectuer en équipant le dispositif de moyens mécaniques tels que des moyens d'application de chocs ou de vibrations.

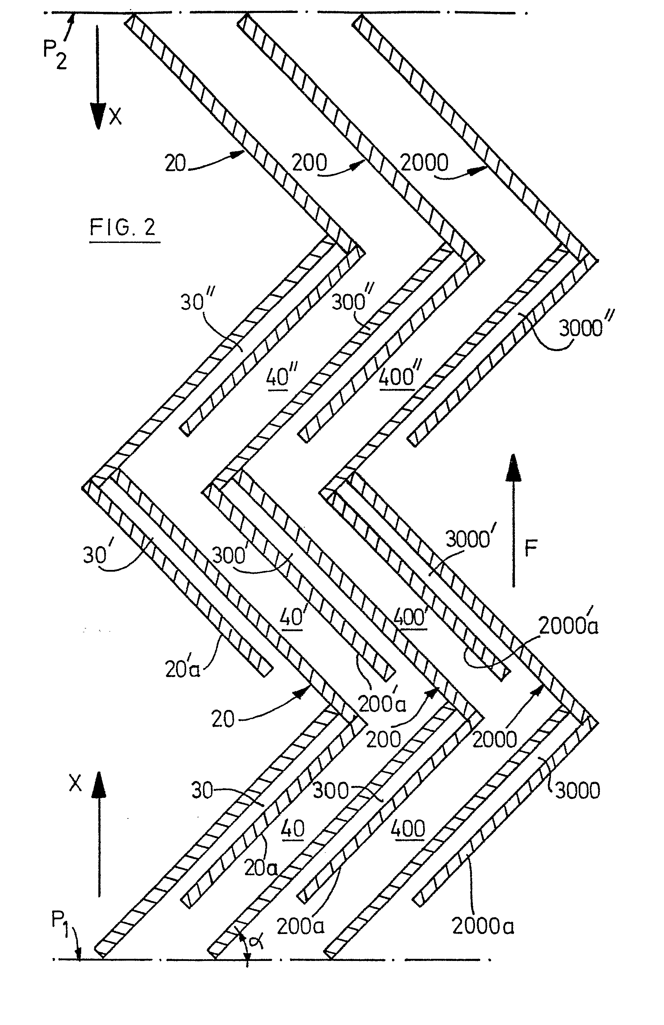

La figure 2 est une coupe, analogue à celle de la figure 1, d'une disposition plus complexe, comprenant un système de plaques à chicanes 20, 200, 2000 ... se développant par exemple dans une même direction générale verticale. L'inclinaison de ces plaques sur le plan $P_1$ normal à la direction d'écoulement est définie par un angle dit angle directeur $\alpha$. Cet angle est choisi en fonction des caractéristiques du gaz à dépoussiérer. L'inclinaison des plaques sur les plans perpendiculaires au plan $P_1$ et parallèles à l'une au moins des parois latérales reliant les plaques à chicanes, est définie par un angle $\beta$ qui peut être égal à 90° ou différent de 90°.

Au niveau de chaque changement de direction de chacune des plaques à chicanes 20, 200, 2000 ... se situe le fond d'une chambre à poussières 30, 300, 3000 ..., puis 30', 300', 3000' ... etc. Ces chambres sont, dans le dispositif donné en exemple ici, disposées alternativement d'un côté et de l'autre des plans successifs d'une même plaque à chicanes. Cette disposition régulière assure notamment une certaine homogénéité des contraintes thermiques du système.

Comme dans l'exemple précédent, les dimensions des passages en zig-zag (ici 40,40',40'' ; 400,400', 400'' ...) parcourus par le gaz chaud à dépoussiérer, les distances entre les éléments qui les limitent et, de façon générale, toutes les dimensions, sont calculées pour que l'écoulement du gaz chaud se fasse sensiblement en régime laminaire.

Le système des plaques à chicanes 20, 200, 2000, etc., est limité par les deux plans $P_1$ et $P_2$ qui peuvent être matérialisés par des structures mécaniques (non représentées) propres à être rapprochées suivant les flèches X,X (respectivement propres à être éloignées l'une de l'autre). Lors du mouvement relatif, les plaques à chicanes (20,200,2000) tendent à s'écarter des plaques secondaires ($20_a$, $200_a$, $2000_a$ ; $20'_a$, $200'_a$, $2000'_a$) maintenues fixes. Ce mouvement favorise l'évacuation des poussières accumulées sur les plaques et dans les chambres, qui sont recueillies par un dispositif approprié (non représenté). Ces poussières sont chaudes , leur température pouvant atteindre plusieurs centaines de degrés, et cette chaleur peut être récupérée.

Un avantage particulièrement grand du dispositif suivant l'invention réside dans son aptitude à être disposé en avant des dispositifs habituels de récupération des énergies thermiques et/ou pneumatiques contenues dans les gaz à filtrer. Ceci est particulièrement favorable pour ces dispositifs récupérateurs, du point de vue de leur comportement physique ou mécanique à haute température.

0135488

Les poussières peuvent également être réinjectées chaudes, comme agent actif ou comme agent
inerte, dans le processus dont elles sont issues
ou dans tout autre processus.

0135488

REVENDICATIONS

1.- Dispositif de filtration de fluides gazeux à haute température, caractérisé en ce qu'il présente, le long d'un trajet parcouru par le fluide gazeux à filtrer, au moins un passage à chicanes (2 ; 40,40', 40'' ; 400,400',400'') comportant des espaces de retenue constituant des chambres collectrices de poussières ($3_a$,$3_b$,$3_c$ ; 30,300,3000 ; 30',300',3000'), les dimensions des parties étant calculées en fonction des caractéristiques du fluide à filtrer pour que l'écoulement de celui-ci le long du dispositif reste sensiblement de caractère laminaire.

2.- Dispositif suivant la revendication 1, caractérisé en ce qu'il comporte des espaces de retenue ($3_a$,$3_b$,$3_c$ ; 30,300,3000 ; 30',300',3000') limités d'un côté par la surface d'un élément à chicanes ($2_a$, $2_b$,$2_c$ ; 20,200,2000) et du côté opposé par une plaque secondaire ($2''_a$,$2''_b$,$2''_c$ ; $20_a$,$200_a$,$2000_a$ ; $20'_a$,$200'_a$, $2000'_a$) de préférence sensiblement parallèle à la surface de l'élément à chicanes.

3.- Dispositif suivant les revendications 1 et 2, caractérisé en ce qu'il comporte au moins un espace de retenue limité à son extrémité aval par une paroi de fond ($3'_a$,$3'_b$,$3'_c$) éventuellement perméable au fluide gazeux et reliant la plaque secondaire à l'élément à chicanes auquel elle est sensiblement parallèle.

4.- Dispositif suivant la revendication 1 et l'une quelconque des revendications suivantes, caractérisé en ce qu'il comporte au moins un passage (2 ; 40,40',40'' ; 400,400',400'') d'écoulement pour le fluide à filtrer, limité de part et d'autre par des parois à chicanes (20,200,2000) comportant des chambres à poussières suivant l'une quelconque des revendications 2 et 3.

5.- Dispositif suivant la revendication 4, caractérisé en ce que les chambres à poussières sont distribuées périodiquement le long des parois à chicanes.

6.- Dispositif suivant la revendication 5, caractérisé en ce que les chambres à poussières sont disposées le long d'une chicane sur deux.

7.- Dispositif suivant les revendications 4 et 6, caractérisé en ce que les chambres disposées le long d'une des parois à chicanes (20) alternent avec des chambres disposées le long de la paroi opposée (200).

8.- Dispositif suivant la revendication 1 et l'une quelconque des revendications 2 à 7, caractérisé en ce qu'il est constitué par plusieurs passages (40, 40',40'' ; 400,400',400'') limités de part et d'autre par des parois à chicanes équipées de chambres à poussières, les parois communes à des passages voisins portant des chambres à poussières sur toutes leurs chicanes, disposées alternativement, l'une d'un côté, une autre de l'autre côté de la paroi commune.

9.- Dispositif suivant la revendication 1, comportant un système de parois à chicanes, juxtaposées, laissant entre elles des passages pour l'écoulement du fluide gazeux à filtrer, caractérisé en ce que le système est limité à ses deux extrémités par deux plans sensiblement parallèles ($P_1$,$P_2$) , le dispositif comportant des moyens auxiliaires pour approcher et éloigner ces plans l'un de l'autre en sorte de déformer le système des parois à la façon d'un accordéon, déformation au cours de laquelle les parois sensiblement parallèles des chambres tendent à s'écarter l'une de l'autre et/ou à s'incliner l'une par rapport à l'autre.

10.- Dispositif suivant la revendication 9, caractérisé en ce que les parois d'un côté de chaque chambre à poussières sont maintenues fixes.

11.- Dispositif suivant la revendication 1, caractérisé en ce qu'il comprend des moyens permettant d'évacuer par gravité les matières retenues et accumulées dans le dispositif.

12.- Dispositif suivant la revendication 1, caractérisé en ce qu'il comprend des moyens permettant d'évacuer, autrement que par gravité, ou concurremment à la gravité, des matières retenues et accumulées dans le dispositif.

13.- Dispositif suivant la revendication 12, caractérisé en ce que les moyens susdits sont des moyens d'application de chocs ou de vibrations, ou des moyens pneumatiques.

14.- Dispositif suivant la revendication 13, caractérisé en ce qu'il comprend des moyens pour évacuer les matières retenues et accumulées dans les chambres et sur les parois, à l'aide d'au moins un jet de gaz.

15.- Dispositif suivant l'une quelconque des revendications précédentes, caractérisé en ce que les chambres à poussières présentent leurs ouvertures au fluide gazeux qui s'écoule dans les passages entre parois.

16.- Dispositif suivant la revendication 15, caractérisé en ce que le sens de parcours des passages par le fluide gazeux, dont la direction (F) est de façon générale verticale, est dirigé de bas en haut, en sorte que les poussières accumulées dans ces chambres tombent par gravité d'un niveau de chicane au niveau de chicane inférieur, et ainsi de suite jusqu'au bas ($P_2$) du dispositif en permettant la décharge des poussières accumulées à cet endroit.

17.- Dispositif suivant l'une quelconque des revendications précédentes, caractérisé en ce qu'il est monté en avant de systèmes de récupération tels qu'économiseurs, échangeurs, turbines ou autres équipements de production d'énergie thermique ou mécanique permettant une récupération concomitante éventuelle des calories contenues dans les matières retenues dans le dispositif.

FIG. 1

0135488

FIG. 2